# EUROPEAN PATENT APPLICATION

(11) **EP 1 731 044 A1**
(43) Date of publication of application: **13.12.2006**
(21) Application number: 06011226.5
(22) Date of filing: 31.05.2006
(51) Int. Cl.: A23L 1/218, A23L 1/30, A23L 1/304

(54) **A process for the fermentation of papaya pulp and juice in the presence of selenium soluble compounds, the product obtainable by this process and compositions containing it**

(30) Priority: 10.06.2005 IT MI20051079
(71) Applicant: MARFARMA HOLDING S.p.A., 20154 Milano (IT)
(72) Inventor: Heyda, Alessandro, 20145 Milano (IT)
(74) Representative: Minoja, Fabrizio

(57) **Abstract**

A process for the fermentation of papaya pulp and juice by means of Saccharomyces strains, in which the fermenting suspension is added with a selenium soluble compound.

## Description

The present invention relates to a process for the fermentation of papaya pulp and juice in the presence of selenium soluble compounds, the product obtainable by this process and compositions containing it.

### Prior art

Fermented papaya (Carica papaya) is a component of nutritional compositions (nutraceuticals) marketed for some years, whose antioxidant and free radicals scavenging properties have been studied and documented (Biochem Mol.Biol. Int., 1998, 45 (1):11-23).

Conventional preparation processes involve yeast fermentation of the fruit juice and pulp for several days.

JP 2001120224 discloses a process for the fermentation of papaya by different microorganisms, mostly yeasts usually present in the fruit, which are added with Lactobacilli cultures.

### Disclosure of the invention

It has now been found a convenient process which allows to carry out the fermentation in the presence of selenium soluble compounds.

The process of the invention provides fermented papaya containing selenium in nutritional amounts. The product obtainable by fermentation, which is a further object of the invention, has increased antioxidizing activity and provides suitable amounts of bioavailable selenium - whose deficiency in the body exposed to risks of degenerative diseases such as tumors and pancreatitis - and is useful in general in all those conditions which benefit from preventing formation of free radicals, known etiologic agents in a number of pathologies due to their effect on lipid lipoperoxidation, immune system cells, skin and, in general, on cells exposed to oxidative stress. A wide scientific literature on selenium effects includes different medicine fields, such as oncology, dermatology, gynecology, gastroenterology and cardiology.

### Detailed disclosure of the invention

Water-diluted papaya mashed pulp and juice are used as fermentation substrate. The resulting suspension should have a dry residue ranging between 5 to 15%, preferably 10%.

The resulting suspension can be added with glucose, saccharose or fructose to a concentration ranging 0.1 to 10%.

The microorganisms used can be any *Saccharomyces* strains, particularly *Saccharomyces boulardii* or *bayanus* strains. Said yeasts are added to the substrate in amounts ranging between 0.1 and 100 g / 100 kg, preferably 5 g.

The fermentation process is effected at room temperature, between 18 and 30°C, preferably at 20°C.

Fermentation is completed after a time ranging between 10 and 40 days, usually in 15 days (at 20°C).

Starting from the 10^{th} day included, the fermenting suspension is added with NaHSeO₃ in amounts ranging between 10 and 100 g / 100 kg of substrate (preferably 45.88).

Alternatively, any selenium-containing soluble compound can be used.

This addition is carried out for 5 consecutive days, namely to the 14^{th} day included.

After 15 days, at the end of the fermentation, the product is subjected to pasteurization to completely inactivate the yeast.

Afterwards, maltodextrins are preferably added, in such an amount that the dry residue be about 30 kg / 100 kg of substrate (suspension).

The suspension is evaporated to dryness, thereby obtaining a yellowish crystalline powder which contains 400 mcg of organic selenium (seleno amino acids, mainly selenomethionine and selenocysteine) / gram of powder.

The final product, referred to as seleno-fermented papaya, can be used such as the active ingredient for nutritional supplements and/or medicaments, which can be employed in all oxidative stress conditions and related degenerative pathologies.

The resulting product has, in addition to the properties of fermented papaya (radical scavenger able to activate superoxido dismutase and lipoperoxidase activities at the cerebral level), also the well known properties of selenium (component of a number of seleno proteins among which glutathione peroxidase or GPx).

## Claims

1. A process for the fermentation of papaya pulp and juice by *Saccharomyces* strains, in which the fermenting suspension is added with a selenium soluble compound.

2. The process as claimed in claim 1, in which the selenium compound is NaHSeO₃.

3. The process as claimed in claim 1 or 2, in which the *Saccharomyces* strain is a *Saccharomyces boulardii* or *bayanus* strain.

4. The process as claimed in any one of claims 1 to 3, in which 10 to 100 g of selenium compound / 100 kg of papaya pulp or juice are added.

5. The process as claimed in any one of claims 1 to 4, in which fermentation is carried out at a temperature ranging between 18 and 30°C.

6. The process as claimed in any one of claims 1 to 5, in which the selenium compound is added after 10 days of fermentation, which is continued for five consecutive days.

7. Selenium-containing fermented papaya, obtainable by the process of claims 1-6.

8. Compositions comprising the selenium-containing fermented papaya of claim 7, in a mixture with suitable excipients.
